Europäisches Patentamt

European Patent Office

Office européen des brevets

(11) Publication number: **0 435 621 B1**

# EUROPEAN PATENT SPECIFICATION

(45) Date of publication of patent specification: **28.09.94**  (51) Int. Cl.⁵: **B60C 3/04**

(21) Application number: **90314173.7**

(22) Date of filing: **21.12.90**

(54) **High speed tyre for heavy duty vehicle.**

(30) Priority: **29.12.89 JP 341267/89**

(43) Date of publication of application:
**03.07.91 Bulletin 91/27**

(45) Publication of the grant of the patent:
**28.09.94 Bulletin 94/39**

(84) Designated Contracting States:
**DE FR GB**

(56) References cited:
**GB-A- 2 082 983**
**US-A- 4 427 046**

(73) Proprietor: **SUMITOMO RUBBER INDUSTRIES
LIMITED
1-1 Tsutsuicho 1-chome
Chuo-ku
Kobe-shi Hyogo-ken (JP)**

(72) Inventor: **Ueyoko, Kiyoshi
2-10-2 Fukaeminami,
Higashinari-ku
Osaka-shi, Osaka-fu (JP)**
Inventor: **Yoshikawa, Hideaki
2-12-54 Nichimaiko,
Tarumi-ku
Kobe-shi, Hyogo-ken (JP)**
Inventor: **Takatsu, Mikio
1-12-18 Takatsukasa
Takarazuka-shi, Hyogo-ken (JP)**

(74) Representative: **Stewart, Charles Geoffrey
SP TYRES UK LIMITED
Tyre Technical Division
Fort Dunlop, Erdington, Birmingham B24 9OT
(GB)**

## Description

This invention relates to a high speed, heavy duty vehicle tyre.

Recently, in tyres used in heavy duty and high speed conditions such as aircraft tyres, a radial structure has begun to be employed to give structural durability, running performance and fuel efficiency. In such aircraft tyres, however, since they are used at high internal pressure, carry heavy loads and run at high speed, a greater durability is required compared to tyres used in other fields. Especially the bead part is likely to be peeled or damaged in the carcass edge regions due to the strain caused by bending deformation under large loads at the time of take-off or landing. Hitherto it has been attempted to suppress the bending deformation by enhancing the bead rigidity, by increasing the bead volume, or by using reinforcement layers made of organic or inorganic fibre cords.

In such rigidity reinforcing measures, however, the internal heat generation due to bending deformation cannot be decreased, and satisfactory bead damage resistance could not be obtained.

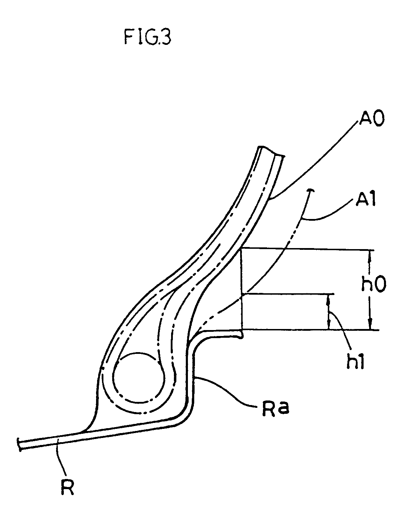

The present inventors accordingly accumulated various studies about the bending deformation of the bead regions during take-off and taxi simulation tests and others conforming to the Federal Aviation Administration Technical Standard Order TSO-C62c. As a result, comparing the tyre bead part AO without load and the tyre bead part A1 with specified load as shown in Figure 3, when mounted on the specified rim R and inflated to the specified internal pressure, it was discovered that

(1) the bead part A1 deforms to a specific shape without being influenced by the profile of the bead part AO, and

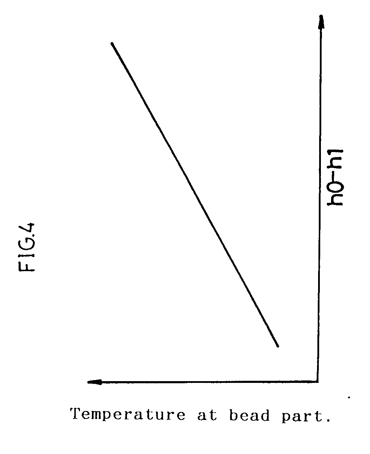

(2) the internal heat generation of the bead part is lower when the bead deformation hO-h1 is smaller, which is the difference between the initial height hO and the loaded height h1, or the length between the outer surface of the bead parts AO, A1 on the vertical line set up from the outer edge of, for example, rim flange Ra, and the upper edge of the rim flange Ra as shown in Figure 4. It is also known that the heat generation of the bead part is somewhat increased when the rigidity is increased by increasing the thickness of the bead parts, especially the clinch thickness which is the thickness in the flexural part, in order to decrease the bead deformation hO-h1.

The present inventors discovered that the initial height hO can be preliminarily reduced by defining the radius of curvature of the tyre outer circumference below the maximum width point of the tyre to form a downward swollen shape, thereby decreasing the bead deformation hO-h1, so that the bead part durability is enhanced while suppressing the bead part heat generation.

It is hence the object of the invention to provide a high speed tyre for heavy duty vehicles capable of decreasing the bead part bending deformation and bead heat generation so as to suppress bead damage.

According to the present invention a high speed tyre for heavy duty vehicles comprises a radial carcass extending through a tread, sidewalls and folded at each edge around a bead core of a bead and a belt layer disposed radially outside said carcass wherein in a profile of the outer circumference of the tyre on the tyre section including the tyre axis when the tyre is mounted on its specified rim and inflated to its specified internal pressure, the maximum width and radius ratio Ro/W of the radius of curvature Ro of the arc which passes through the maximum width point C where the tyre width is the maximum W, the reference point Q spaced from the bead bottom line by a distance of 0.2 times the section height H of the tyre, and the intermediate height point M which is at an intermediate height between the maximum width point C and the reference point Q, to the tyre maximum width W is not more than 0.54.

The resultant tyre has a profile of the outer circumference of the tyre swollen downwardly by so defining the maximum width and radius ratio Ro/W as the ratio of the radius of curvature Ro of the arc passing though the maximum width point C, reference point Q and intermediate height point C to the maximum width W at 0.54 or less. As a result, without having to modify the tyre structure or lower the running performance, the tyre has a smaller initial height hO in the bead part without load. On the other hand, the height h1 of the bead part in the loaded state is nearly constant, and hence the tyre has decreased bead deformation h1-hO. Therefore bead damage can be significantly suppressed by the reduction in the effects of bending stress and deformation heat generation owing to the decrease of the bead deformation h1-hO.

Embodiments will now be described, by way of example only, in conjunction with the attached drawings, in which:

Figure 1 is a half-sectional view showing an embodiment of the invention;

Figure 2 is a diagram showing the tyre profile in comparison with the prior art;

Figure 3 is a schematic diagram showing the bending deformation state of the bead; and

Figure 4 is a diagram showing the relation between the bead outer surface heights hO, h1 and the bead temperature.

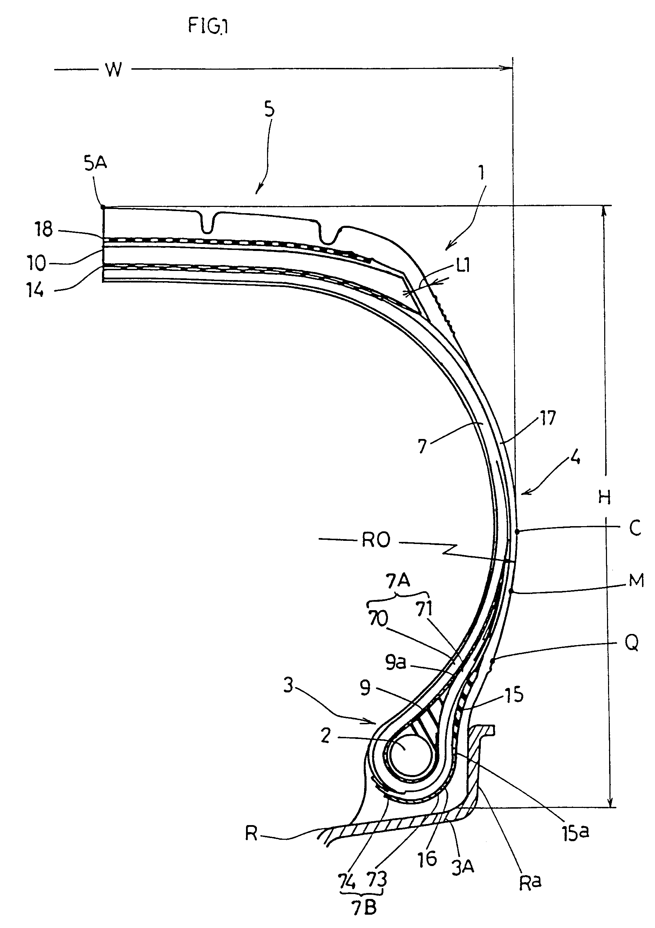

Figure 1 shows a half-sectional view of a 46 x 17R20 radial tyre 1 for aircraft mounted on its specified rim R and inflated to its specified internal pressure. The tyre part shown comprises a bead 3 with an annular bead core 2 through it, a sidewall 4 consecutive to the bead part 3 and extending outwardly in the radial direction, and a tread 5 which links between the outer ends of the two sidewalls 4.

In addition, the tyre 1 also has a carcass 7 consisting of an inner layer 7A composed of plural, for example, four inner plies wrapped or folded around the bead core 2 from the inside to the outside of the tyre, and an outer layer 7B composed of plural, for example, two outer plies enclosing the folded-back portion of the inner layer 7A from the outside to the inside of the tyre.

The inner layer 7A has a folded-back part 71 around the bead core 2 at both edges of a toroidal main body part 70 which extends through the tread 5 and sidewalls 4. The outer layer 7B has a wrapped part 74 enclosing the folded-back part 71 from the outside to the inside of the bead core 2 at both edges of a toroidal main body part 73.

The inner plies 7A and outer plies 7B are in this example formed by carcass cords of organic fibre cords which cords are arranged in the radial direction having an inclination of 70 to 90 degrees to the tyre's equator. The carcass 7 has the carcass cords crossed and inclined alternately in the circumferential direction between adjacent carcass plies. For the organic fibre cords, meanwhile, rayon, polyester, vinylon, nylon, aromatic polyamide or the like may be used.

In addition, between the main body part 70 and the folded-back part 71 of the inner layer 7A of the carcass 7, there is a rubber bead apex 9 extending outwardly in the radial direction from the bead core 2. A side packing rubber 15 having a small thickness extends inwardly and outwardly in the radial direction along the outer surface of the main body part 73 of the carcass in the bead 3. The lower end 15a of the side packing rubber 15 is cut off at the upper end of the reinforcement filler 16 which extends on the bottom surface of the wrapping part 74. Also the side packing rubber 15 is covered with a rubber sidewall 17 which forms the outer side surface of the tyre from the bead 3 to the sidewalls 4.

The tread 5 has a belt layer 10 positioned radially outside the carcass 7. A cut breaker 14 is positioned between the belt layer 10 and the carcass 7.

The belt layer 10 is composed of plural eight belt plies.

The cut breaker 14 is composed of two cut breaker plies. The cut breaker 14 runs along the carcass 7 in the middle part of the tread across the tyre's equator, and is gradually outwardly displaced from the carcass 7. Its outer end is terminated at a position about 65 to 85% of the tyre maximum width W, preferably, at a position in a range of about 70 to 78%.

The belt layer 10 is also superimposed on the cut breaker 14, and its outer end extends outwardly over the outer edge of the cut breaker 14. Its outer end is aligned with the slope along the tyre outer surface. The belt width is in a range of about 70 to 85% of the tyre maximum width W, and the shortest distance L1 from the belt outer edge to the tyre outer surface is set in a range of 3 to 15mm.

The cords for the belt plies are made of elastic cords of low stretchability, and are disposed parallel to one another and at an inclination of 0 to 20 degrees to the tyre's equator.

The outer surface of the belt layer 10 is coated with a protective layer 18 to enhance the cut resistance.

In this invention, the tyre has a radius ratio Ro/W between the radius Ro and the width W not more than 0.54 measured in a profile of the outer circumference of the tyre on the tyre section including the tyre axis when the tyre is mounted on its specified rim and inflated to its specified internal pressure. At this point, the ratio Ro/W is defined as the ratio of the radius of curvature Ro of an arc which passes through a maximum width point C, a reference point Q and an intermediate height point M, to the tyre maximum width W. The maximum width point C is defined as the point where the tyre width is the maximum W. The reference point Q is defined as the point which is spaced from the bead bottom line by 0.2 times the sectional height H of the tyre from the bead bottom line to the highest position on the tread. The intermediate height point M is defined as the point which has the intermediate height between the maximum width point C and the reference point Q.

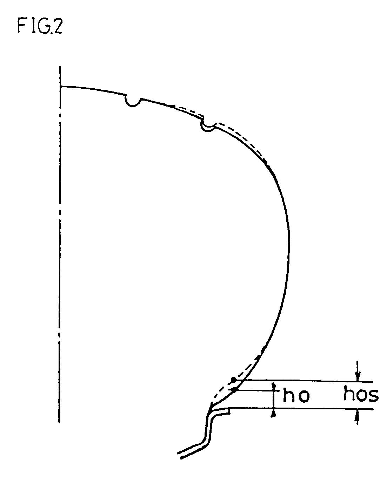

By thus defining the ratio Ro/W to be 0.54 or less, as indicated by a solid line in Figure 2, the tyre profile is swollen downwardly compared to the conventional tyre indicated by a broken line. As a result, without modifying the tyre structure or lowering the running performance, the initial height hO of the bead part in the unloaded state is decreased from the initial height hOS of the conventional tyre. On the other hand, the loaded height h1 of the bead in the loaded state is nearly constant as mentioned above, and hence the tyre 1 has a smaller bead deformation h1-hO. Accordingly bead damage is significantly suppressed by the resultant effects of decreased bending stress and deformation heat generation owing to the decrease of the bead deformation h1-hO.

If the maximum width and radius ratio Ro/W is set smaller than 0.31, the profile is excessively swollen downwardly, and the initial height hO becomes too short. As a result, in the loaded state, the contact pressure with the rim flange Ra increases, and rim chafing is likely to occur. Besides, the increase of contact pressure causes an increase in bead temperature. Thus the preferable range is 0.54 to 0.31 and more preferably 0.5 to 0.4.

Hence, by adequately reducing the bead deformation hO-h1, lowering the bending stress and deformation heat generation, bead damage may be prevented significantly.

Also the 100% modulus MP of the side packing rubber is 53 to 96 $kg/cm^2$, the 100% modulus MA of the bead apex rubber is 78 to 120 $kg/cm^2$, the 100% modulus MS of the sidewall rubber is 14 to 50 $kg/cm^2$, and the moduli MP, MA, MS are in the relation of MS < MP < MA. Thus accordingly the step difference of rigidity is decreased while enhancing the overall rigidity, and shearing stress is lessened and the bead durability is improved.

Aircraft tyres having the tyre structure as shown in Figure 1 in the tyre size of 46 x 17R20 were fabricated according to the specifications in Table 1. These trial tyres were subjected to measurement of bead temperature for 50 cycles H/S in accordance with the Federal Aviation Administrative Technical Standard Order TSO-C62c. The results are shown in the same Table.

In this Table, the bead heat generation index is expressed by dividing the temperature difference of the mean temperature after running 50 cycles of the take-off simulation test of TSO-C62c and the bead temperature before start of each test, by the bead temperature before start.

As shown in the Table, the tyres of the invention are found to be capable of reducing the bead heat generation.

Table 1

| | Embodiment 1 | Embodiment 2 | Embodiment 3 | Embodiment 4 | Embodiment 5 |
|---|---|---|---|---|---|
| RO/W | 0.486 | 0.412 | 0.412 | 0.411 | 0.432 |
| Bead heat generation index | 0.83 | 0.98 | 0.90 | 0.76 | 0.95 |

| | Embodiment 6 | Reference 1 | Reference 2 | Reference 3 |
|---|---|---|---|---|
| RO/W | 0.536 | 0.584 | 0.585 | 0.560 |
| Bead heat generation index | 1.05 | 1.17 | 1.05 | 1.15 |

## Claims

1. A high speed tyre for heavy duty vehicles comprising a radial carcass (7) extending through a tread (5), sidewalls (4) and folded at each edge around a bead core (2) of a bead (3) and a belt layer (10) disposed radially outside said carcass (7) characterised in that in a profile of the outer circumference of the tyre on the tyre section including the tyre axis when the tyre is mounted on its specified rim and inflated to its specified internal pressure, the maximum width and radius ratio (Ro/W) of the radius of curvature (Ro) of the arc which passes through the maximum width point (C) where the tyre width is the maximum (W), the reference point (Q) spaced from the bead bottom line by a distance of 0.2 times the section height (H) of the tyre, and the intermediate height point (M) which is at an intermediate height

5

between the maximum width point (C) and the reference point (Q), to the tyre maximum width (W) is not more than 0.54.

2.  A tyre according to claim 1 characterised in that the ratio (Ro/W) is greater than 0.31.

3.  A tyre according to claim 1 characterised in that the ratio (Ro/W) is in the range of 0.5 to 0.4

**Patentansprüche**

1.  Ein Hochgeschwindigkeitsreifen für Schwerlastfahrzeuge mit einer radialen Karkasse (7), die sich durch eine Lauffläche (5), Seitenwände (4) erstreckt und an jedem Rand um einen Wulstkern (2) eines Wulstes (3) gefaltet ist, und einer Gürtellage (10), die radial außerhalb der Karkasse (7) angeordnet ist, dadurch gekennzeichnet, daß in einem Profil des äußeren Umfangs des Reifens auf dem Reifenquerschnitt, der die Reifenachse einschließt, wenn der Reifen auf seiner spezifizierten Felge aufgezogen und zu seinem spezifizierten internen Druck aufgepumpt ist, das maximale Breite- und Radiusverhältnis (Ro/W) des Krümmungsradius (Ro) des Bogens, welcher durch den Punkt (C) maximaler Breite, wo die Reifenbreite das Maximum (W) aufweist, den Referenzpunkt (Q), der von der Wulstbodenlinie um einen Abstand von 0,2 mal der Querschnitthöhe (H) des Reifens beabstandet ist, und den Punkt (M) dazwischenliegender Höhe, welcher in einer dazwischenliegenden Höhe zwischen dem Punkt (C) maximaler Breite und dem Referenzpunkt (Q) liegt, tritt, zu der maximalen Reifenbreite (W) nicht mehr als 0,54 beträgt.

2.  Ein Reifen nach Anspruch 1, dadurch gekennzeichnet, daß das Verhältnis (Ro/W) größer als 0,31 ist.

3.  Ein Reifen nach Anspruch 1, dadurch gekennzeichnet, daß das Verhältnis (Ro/W) in dem Bereich von 0,5 bis 0,4 liegt.

**Revendications**

1.  Pneumatique pour grandes vitesses destiné à un véhicule lourd, comprenant une carcasse radiale (7), disposée dans une bande de roulement (5) et des parois latérales (4) et repliée à chaque bord autour d'une tringle (2) d'un talon (3), et une couche de ceinture (10) disposée radialement à l'extérieur de la carcasse (7), caractérisé en ce que, dans un profil de la circonférence externe du pneumatique, dans une section du pneumatique contenant l'axe du pneumatique, lorsque le pneumatique est monté sur sa jante spécifiée et est gonflé à sa pression interne spécifiée, le rapport de la largeur maximale et du rayon (Ro/W) du rayon de courbure (Ro) de l'arc qui passe par le point de largeur maximale (C) auquel la largeur du pneumatique est maximale (W), par un point de référence (Q) séparé de la droite inférieure des talons par une distance égale à 0,2 fois la hauteur (H) de la section du pneumatique et par un point de hauteur intermédiaire (M) qui se trouve à une hauteur intermédiaire comprise entre celle du point de largeur maximale (C) et celle du point de référence (Q), à la largeur maximale (W) du pneumatique ne dépasse pas 0,54.

2.  Pneumatique selon la revendication 1, caractérisé en ce que le rapport (Ro/W) est supérieur à 0,31.

3.  Pneumatique selon la revendication 1, caractérisé en ce que le rapport (Ro/W) est compris entre 0,5 et 0,4.

FIG.1

FIG.2

FIG.3

FIG.4